# EUROPÄISCHE PATENTSCHRIFT

(11) **EP 0 232 548 B1**
(45) Veröffentlichungstag und Bekanntmachung des Hinweises auf die Patenterteilung: **05.05.1993**
(21) Anmeldenummer: 86118081.8
(22) Anmeldetag: 27.12.1986
(51) Int. Cl.: B23Q 37/00, B25J 9/02

(54) **Bearbeitungsstation für grosse Werkstücke**
Work station for large work pieces
Poste de travail pour de grandes pièces à travailler

(30) Priorität: 13.02.1986 DE 3604470
(43) Veröffentlichungstag der Anmeldung: 19.08.1987
(73) Patentinhaber: Held Laser Systems AG, CH-6022 Grosswangen (CH)
(72) Erfinder: Held, Jürgen, Dipl.-Ing., D-6056 Heusenstamm (DE)
(74) Vertreter: Rupprecht, Klaus, Dipl.-Ing.

(56) Entgegenhaltungen:
- DE-A- 1 805 145
- FR-A- 2 123 238
- GB-A- 2 098 577
- GB-A- 2 120 202
- US-A- 3 262 593
- US-A- 3 665 148
- US-A- 4 005 782
- WELDING AND METAL FABRICATION, Band 45, Nr. 6, Juli-August 1977, Seiten 333-344; "Automated resistance welding systems"

## Beschreibung

Bearbeitungsstation, insbesondere für vergleichsweise große Werkstücke, mit einer vorzugsweise einen Laser aufweisenden Bearbeitungseinheit, die mittels eines an einem stationären Ständer beidseitig über je einen Spindelantrieb bewegbaren Schlittens und eines daran vorgesehenen, ebenfalls einen Spindelantrieb aufweisenden Supports längs einer ersten und zweiten Achse, die senkrecht zueinander angeordnet sind, sowie weiterhin längs einer dritten Achse, die senkrecht zu der durch die beiden ersten Achsen definierten Ebene vorgesehen ist, verschiebbar ist, und gegebenenfalls im Bereich des Endes der dritten Achse dreh- und kippbar angeordnet ist (vierte und fünfte Achse).

Moderne Fertigungsvorrichtungen und Fertigungsstraßen werden in zunehmendem Maße mit Robotern bestückt. Sie übernehmen mit hoher Genauigkeit Arbeiten, die bisher von Hand ausgeführt werden müssen. Grund für ihren Einsatz ist die gleichbleibende Genauigkeit und Qualität des Arbeitsergebnisses, das sie liefern. Diese Roboter sind in der Regel sogenannte Knickarmroboter. Im wesentlichen bestehen sie aus einer stationär und drehbar angeordneten Standsäule, an der hintereinander gelenkig miteinander verbundene Teilarme vorgesehen sind. Am Ende des letzten Teilarmes ist eine Arbeitsgerätschaft, wie Greifer, Schweißeinrichtungen, Schraubendreheinrichtung oder dgl. angeordnet, mit der der Knickarmroboter letztendlich die ihm zugeordneten Arbeiten ausführt. In den Teilarmen des Knickarmroboters sind vergleichsweise komplizierte Kraftübertragungs- und Gelenk- oder Verschwenkeinrichtungen vorgesehen, die die einzelnen Teilarme in die Lage versetzen, jeweils in die verschiedensten Richtungen verschwenkt zu werden, so daß quasi jeder Punkt im Raum innerhalb des Arbeitsbereiches des Knickarmroboters von der Arbeitseinrichtung bei entsprechender Steuerung erreicht werden kann und dort die Arbeiten ausgeführt werden können.

Trotz des erheblichen technischen und wirtschaftlichen Fortschrittes, der mit der Entwicklung solcher Knickarmroboter einhergeht, weisen sie dennoch verschiedene Nachteile auf. Wie bereits erwähnt, bedarf es aufwendiger Verbindungs- und Antriebseinrichtungen, um die einzelnen Teilarme von Knickarmrobotern so miteinander zu verbinden, daß eine ausreichende Verfahrbarkeit der Arbeitseinrichtung gegeben ist. Hierbei muß beachtet werden, daß angestrebt wird, erhebliche Kräfte mit solchen Robotern zu übertragen um sie auch dort einsetzen zu können, wo sie dem Menschen schwere körperliche Arbeit abnehmen sollen, so zum Beispiel im Automobilbau und bei der Handhabung von schweren Werkstücken. Es liegt auf der Hand, daß somit die Verbindungs- und Antriebseinrichtungen großen Belastungen ausgesetzt sind. Dementsprechend sind sie einem erheblichen Verschleiß unterworfen und störanfällig. Hervorzuheben ist noch, daß der Arbeitsbereich der Knickarmroboter letztendlich nur beschränkt ist. Definiert und begrenzt wird er durch den Kreis, den die am maximal erstreckten Roboterarm angeordnete Arbeitseinrichtung um die zentrale Längs- und Drehachse des Roboterständers als Drehpunkt beschreiben kann. Von besonderer Bedeutung ist hierbei, daß Knickarmroboter bei einer solchen maximalen Erstreckung nur noch vergleichsweise geringe Kräfte übertragen können. Gleichzeitig geht die Positioniergenauigkeit proportional zurück. Ähnliches gilt für die Dynamik des Systems. Der erwähnte maximale Arbeitsbereich steht somit in der Praxis überhaupt nicht zur Verfügung, wenn, wie dies die Regel ist, genaues Arbeiten gefordert wird.

Andere Fertigungsroboter, wie sie beispielsweise aus der DE-A-1 805 145 bekannt sind und die die Grundlage für den Oberbegriff des vorliegenden Hauptanspruchs bildet, weisen ähnliche Nachteile wie die vorstehend beschriebenen Knickarmroboter auf. Der dort beschriebene Roboter weist grundsätzlich ebenfalls eine Säulenkonstruktion mit relativ großen Hebelarmen auf, wodurch die geforderte hohe Präzision der Positionierung der Bearbeitungseinheit aufgrund der schnell zu verfahrenden großen Massen und der über die Hebelarme zu übertragenden großen Kräfte nicht immer gewährleistet werden kann. Dies ist auch mit auf den Umstand zurückzuführen, daß der Schlitten der bekannten Vorrichtung nur einseitig angetrieben ist. Beim Dauerbetrieb der bekannten Vorrichtung und dem damit einhergehenden Verschleiß muß beim Verfahren des Schlittens mit einer einseitigen Beanspruchung auf der Seite des Antriebes und der damit einhergehenden Positionierungsungenauigkeiten gerechnet werden. Auch ist dieser bekannte Roboter aufgrund der starren Anordnung seines Ständers relativ unflexibel.

Die Aufgabe der Erfindung besteht darin, eine Bearbeitungsstation der eingangs genannten Art zu schaffen, die eine hochpräzise Positionierung der Bearbeitungseinheit, insbesondere auch beim Übertragen größerer Kräfte ermöglicht, wobei die Station mehr Freiheitsgrade als der letztgenannte Roboter aufweisen soll. Diese Aufgabe ist gemäß der Erfindung dadurch gelöst, daß der Ständer als im wesentlichen senkrecht stehender Rahmen ausgebildet ist und im Bereich seiner horizontalen Ober- und Unterkante je ein Spindelantrieb für den Schlitten aufweist, der seinerseits im Bereich seiner beiden senkrecht zu seiner Bewegungsrichtung verlaufenden Außenkanten mit je einem Spindelantrieb für eine Lagerung versehen ist und daß der Rahmen im Bereich seines Fußes um eine horizontal verlaufende Achse verschwenkbar ist.

Die erfindungsgemäße Bearbeitungsstation bringt den Vorteil, daß sie einen überaus robusten und somit zuverlässigen Aufbau aufweist. Dennoch ist die Bearbeitungseinheit, insbesondere über den doppelseitigen Antrieb von Schlitten und Support schnell und zuverlässig an praktisch jedem Punkt im Raum innerhalb des relativ großen Arbeitsbereiches der Bearbeitungsstation positionierbar. Die Bewegungen sind mit maschinenbaulichen Mitteln vergleichsweise einfach ausführbar. Der Transport und die Positionierung der Bearbeitungseinheit im Raum erfolgt auf diese Weise relativ problemlos und vor allen Dingen überaus genau, da jeweils zwei Antriebe vorgesehen sind, die symmetrisch angreifen. Von Bedeutung ist bei der erfindungsgemäßen Bearbeitungsstation, daß die großen Massen dem stationären Rahmen in zwei aufeinander senkrecht stehenden Ebenen bewegbar sind. Auf diese Weise werden Dreh- und Kippmomente wegen der kurzen Hebelarme niedrig gehalten. Dies trägt wiederum zur Stabilität der erfindungsgemäßen Station sowie zur Genauigkeit der Positionierung der Bearbeitungseinrichtung bei. Durch die Anordnung einer horizontalen Schwenkachse im Bereich des Fußes des Rahmens ist es möglich, die erfindungsgemäße Bearbeitungsstation relativ komplizierten Werkstücken auf einfache Weise anzupassen.

Nach einem anderen Merkmal der Erfindung ist vorgesehen, daß mindestens zwei Rahmen mit jeweils mindestens einer Bearbeitungseinheit vorgesehen sind, wobei in Fortführung der Erfindung die beiden Rahmen parallel zueinander vorgesehen und die Bearbeitungseinheiten einander zugewandt sind. Bei dieser Ausführungsform kann eine Mehrzahl von Bearbeitungsvorgängen gleichzeitig an einem Werkstück vorgenommen werden.

Bei einem besonders bevorzugten Ausführungsbeispiel der Erfindung sind drei derartiger Bearbeitungsstationen tunnelförmig nach Art eines umgekehrten U vorgesehen. Es wird hierdurch eine Transferstraße erhalten. In diesem Falle ist dann der stationäre Rahmen nicht senkrecht sonder waagerecht vorgesehen.

Schließlich liegt es auch im Rahmen der Erfindung zwei Bearbeitungsstationen so zueinander anzuordnen, daß im Falle von zwei senkrechten Rahmen diese einen rechten Winkel miteinander einschließen, wodurch ein Werkstück ebenfalls von zwei Seiten aus gleichzeitig bearbeiten werden kann.

Weitere Einzelheiten, Merkmale und Vorteile der Erfindung ergeben sich aus der folgenden Beschreibung mehrerer Ausführungsbeispiele sowie anhand der schematischen Zeichnung und den Unteransprüchen. Es zeigen:
- Fig. 1: eine schaubildliche Darstellung der erfindungsgemäßen Bearbeitungsstation;
- Fig. 2: eine Stirnansicht einer besonders bevorzugten Ausführungsform der Erfindung, bei der drei Bearbeitungssatationen gemäß der Erfindung zu einer Fertigungseinheit zusammengefaßt sind;
- Fig. 3: eine Draufsicht auf den Gegenstand der Fig. 1 zur Darstellung des möglichen Arbeitsbereiches, der mit der erfindungsgemäßen Station abgedeckt werden kann und
- Fig. 4: die gleiche Ansicht wie Fig. 2 auf einen herkömmlich Knickarmroboter unter Darstellung des mit dieser bekannten Vorrichtung bedienbaren Arbeitsbereiches.

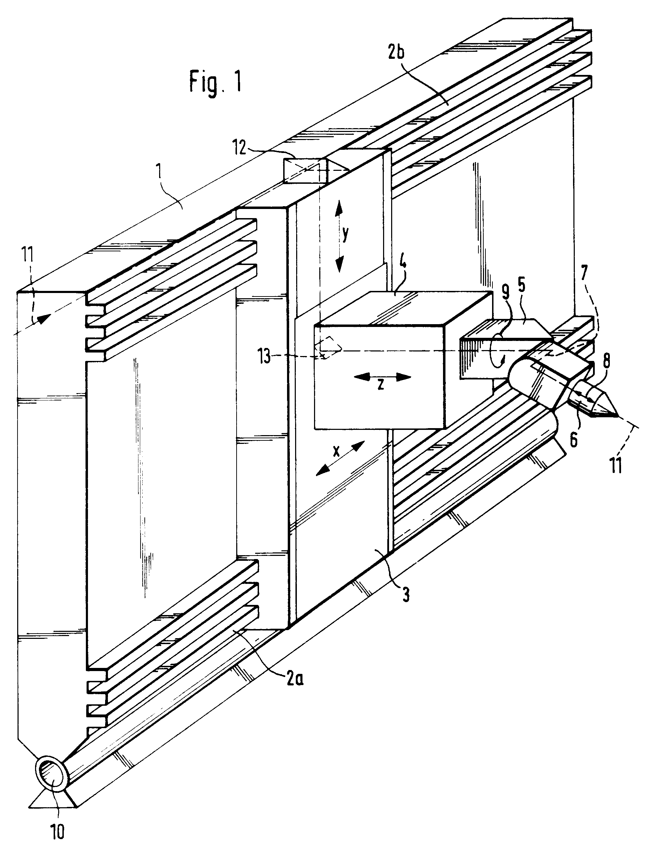

Gem. Fig. 1 ist ein Ständer 1 vorgesehen, der in der Regel senkrecht angeordnet ist. Er weist Spindelantriebe 2a und 2b auf, die horizontal verlaufen und eine Bewegung eines Schlittens 3 längs einer ersten Achse, der X-Achse, ermöglichen. Der Kernteil dieses Schlittens 3 ist darüber hinaus in Richtung einer zweiten Achse, der Y-Achse, verschiebbar. Die Y-Achse steht senkrecht zur X-Achse. Am Schlitten 3 ist eine Lagereinrichtung 4 für einen Support 5 angeordnet. Der Support 5 seinerseits ist in Richtung einer dritten Achse, der Z-Achse, verschiebbar.

Mit Hilfe der beschriebenen Anordnung ist es bereits möglich, den Support in jedem beliebigen Punkt innerhalb des Arbeitsbereiches der so gebildeten Bearbeitungsstation zu positionieren.

Am Support 5 selbst ist eine Bearbeitungseinheit 6 angeordnet. Sie ist vorzugsweise um die parallel zur X-Achse verlaufende Drehachse 7 verschwenkbar. bei einem bevorzugten Ausführungsbeispiel ist vorgesehen, die Bearbeitungseinheit 6 nochmals in Richtung des Pfeiles 8 verschieben zu können. Die Schwenkachse 7 bildet somit die fünfte Achse, die Richtung des Pfeiles 8, die vierte Achse, um die das System verschwenkbar bzw. längs derer es verschiebbar ist. Schließlich kann die Positioniergenauigkeit der Bearbeitungseinhet 6 Weiter dadurch gesteigert werden, wenn noch eine Drehbarkeit der Bearbeitungsstation in Richtung des Pfeiles 9 gegeben ist, welcher letztendlich einer sechsten Achse des Systems entspricht. Diese Drehmöglichkeit längs des Pfeiles 9 ist in der Zeichnung nur schematisch angedeutet. Sie ist mit herkömmlichen Mitteln durchführbar, so daß auf eine genaue zeichnerische Darstellung verzichtet werden kann.

Der zentrale Teil des Schlittens 3, welcher die Lagerung 4 aufnimmt, kann mit eben solchen Spindelantrieben 2 versehen sein, wie sie zur Verschiebung des gesamten Schlittens 3 längs der X-Achse genauer dargestellt sind.

Wie ohne weiteres ersichtlich ist, kann mit Hilfe der beschriebenen Bearbeitungsstation die Bearbeitungseinheit in praktisch jedem Punkt des Arbeitsbereiches der Station angeordnet werden, um dort eine Werkstückbearbeitung vorzunehmen.

In der Regel wird die Bearbeitungsstation durch senkrechte Anordnung des Ständers 1 senkrecht am Boden vorgesehen werden. Entsprechende Werkstücke, die nicht dargestellt sind, können es jedoch erforderlich machen, die Bearbeitungsstation unter einem Winkel zum horizontal verlaufenden Boden vorzusehen. In diesem Fall ist es möglich, den Ständer 1 um eine horizontal vorgesehene Drehachse 10 zu verschwenken.

Wie eingangs erwähnt, wird die erfindungsgemäße Bearbeitungsstation insbesondere in Verbindung mit einem Laser zur Material- oder Werkstückbearbeitung eingesetzt. Dieser Laser kann unter Umständen direkt die Bearbeitungseinheit 6 selbst bilden. Bei sehr leistungsstarken Lasern wird es sich jedoch empfehlen, einen Laserstrahl 11 über Spiegel 12 und 13 und gegebenenfalls weiterhin erforderlichen, nicht dargestellten Spiegeln zur Bearbeitungseinheit 6 zu führen und dort austreten zu lassen. Bei der Ausführungsform nach Fig. 1 wird der Strahl 11 auch längs der Schwenkachse 11 geführt.

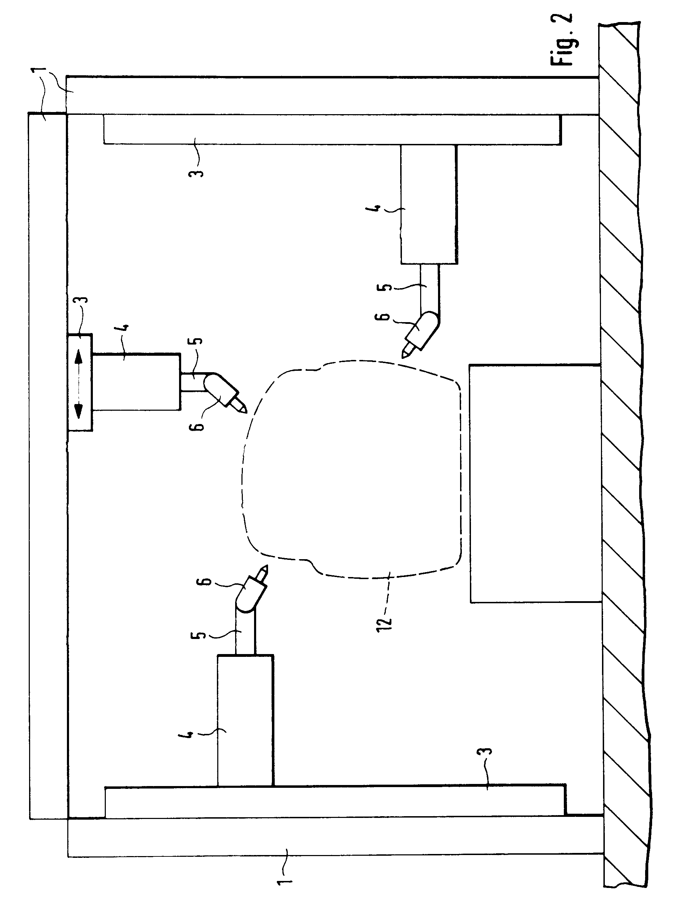

In der Fig. 2 ist ein weiteres bevorzugtes Ausführungsbeispiel der erfindungsgemäßen Vorrichtung in schematischer Weise dargestellt. Der Gegenstand der Fig. 2 besteht grundsätzlich aus drei in Form eines umgekehrten U zusammengefügten Bearbeitungsstationen, wie sie in Fig. 1 dargestellt sind. Zwei Bearbeitungsstationen sind wiederum senkrecht zum Boden und parallel zueinander angeordnet. Eine dritte Bearbeitungsstation ist im Kopfbereich des umgekehrten U vorgesehen und verbindet die beiden senkrecht angeordneten Bearbeitungsstationen.

Auf diese Weise wird eine tunnelförmige Bearbeitungsvorrichtung für große Werkstücke geschaffen.

Ein derartiges Werkstück 12 kann somit gleichzeitig an drei verschiedenen Stellen bearbeitet werden. Das Werkstück kann in die so gebildete Tunnelstation entweder hineinbewegt und nach der Bearbeitung wieder herausbewegt werden. Auch ist es möglich, das Werkstück 12 durch das Tunnel hindurchzubewegen und während dieser Durchlaufbewegung die Bearbeitung mittels der genau positionierbaren Bearbeitungseinheiten 6 vorzunehmen. Auch im vorliegenden Fall läßt man wiederum vorzugsweise einen Laserstrahl aus den Bearbeitungseinheiten 6 austreten.

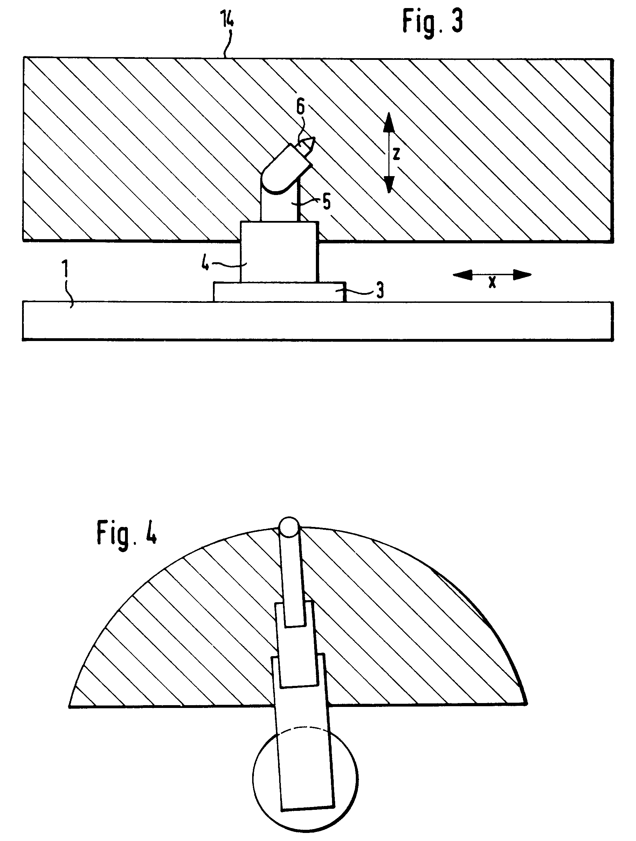

Aus einem Vergleich der Fig. 3 und 4 erhält man einen Eindruck über den maximal möglichen Arbeitsbereich einer erfindungsgemäßen Bearbeitungsstation gegenüber dem eines herkömmlichen Knickarmroboters, der in Fig. 4 gezeigt ist.

Die in Fig. 3 gezeigt schraffierte Fläche gibt diesen Arbeitsbereich der erfindungsgemäßen Bearbeitungsstation wieder. Definiert wird sie durch die mögliche Bewegung des Schlittens 3 längs des Ständers 1 und die senkrecht hierzu mögliche Ausfahrbewegung des Supports 5 in der Halterung 4. Hierdurch kann die äußere Spitze der Bearbeitungseinheit 6 im senkrecht erstreckten Zustand die Kante 14 erreichen. Vernachlässigt sei im vorliegenden Zusammenhang die räumliche Bewegung der Bearbeitungseinheit 6 längs der zur Zeichenebene senkrecht verlaufenden Z-Achse. Diese gilt gleichermaßen für den Gegenstand der Fig. 4.

Vergleicht man nun die schraffierte Fläche 4 mit der nach Fig. 3, so erkennt man ohne weiteres, daß mit der erfindungsgemäßen Vorrichtung eine erheblich größere Fläche, der Arbeitsbereich in der X-Y-Ebene, bestrichen werden kann und dies mit der erfindungsgemäßen Bearbeitungsstation, die hinsichtlich Robustheit und Einfachheit ihrer Anordnung den herkömmlichen Knickarmrobotern überlegen ist.

## Patentansprüche

1. Bearbeitungsstation, insbesondere für vergleichsweise große Werkstücke, mit einer vorzugsweise einen Laser aufweisenden Bearbeitungseinheit (6), die mittels eines an einem stationären Ständer (1) beidseitig über je einen Spindelantrieb bewegbaren Schlittens (3) und eines daran vorgesehenen, ebenfalls einen Spindelantrieb aufweisenden Supports (5) längs einer ersten und zweiten Achse, die senkrecht zueinander angeordnet sind, sowie weiterhin längs einer dritten Achse, die senkrecht zu der durch die beiden ersten Achsen definierten Ebene vorgesehen ist, verschiebbar ist, und gegebenenfalls im Bereich des Endes der dritten Achse dreh- und kippbar angeordnet ist (vierte und fünfte Achse), dadurch gekennzeichnet, daß der Ständer (1) als im wesentlichen senkrecht stehender Rahmen ausgebildet ist und im Bereich seiner horizontalen Ober- und Unterkante je ein Spindelantrieb (2a, 2b) für den Schlitten (3) aufweist, der seinerseits im Bereich seiner beiden senkrecht zu seiner Bewegungsrichtung verlaufenden Außenkanten mit je einem Spindelantrieb für eine Lagerung (4) versehen ist und daß der Rahmen im Bereich seines Fußes um eine horizontal verlaufende Achse (10) verschwenkbar ist.

2. Bearbeitungsstation nach Anspruch 1, dadurch gekennzeichnet, daß mindestens zwei Rahmen mit jeweils mindestens einer Bearbeitungseinheit (6) vorgesehen sind.

3. Bearbeitungsstation nach Anspruch 2, dadurch gekennzeichnet, daß die beiden Rahmen parallel zueinander vorgesehen und die Bearbeitungseinheiten (6) einander zugewandt sind.

4. Bearbeitungsstation nach Anspruch 2 oder 3, dadurch gekennzeichnet, daß die beiden Rahmen im wesentlichen im rechten Winkel zueinander vorgesehen sind.

5. Bearbeitungsstation nach Anspruch 2 oder 3, dadurch gekennzeichnet, daß drei Rahmen nach Art eines Tunnels vorgesehen sind.

## Claims

1. Work station, in particular for comparatively large workpieces, having a work unit (6) which preferably has a laser and which, by means of a slide (3) which can be moved on a stationary standard (1) on either side via one spindle drive each and by means of a rest (5) provided on the slide (3) and likewise having a spindle drive, can be displaced along a first and a second axis, arranged perpendicularly to one another, as well as along a third axis, provided perpendicularly to the plane defined by the two first axes, and if need be is arranged in such a way as to be rotatable and tiltable (fourth and fifth axis) in the end area of the third axis, characterised in that the standard (1) is designed as a frame disposed essentially perpendicularly and in the area of its horizontal top and bottom edge has one spindle drive (2a, 2b) each for the slide (3), which in turn is provided with one spindle drive each for a support (4) in the area of its two outer edges running perpendicularly to its direction of movement, and in that the frame is pivotable about a horizontally running axis (10) in the area of its foot.

2. Work station according to Claim 1, characterised in that at least two frames having in each case at least one work unit (6) are provided.

3. Work station according to Claim 2, characterised in that the two frames are provided parallel to one another and the work units (6) face one another.

4. Work station according to Claim 2 or 3, characterised in that the two frames are provided essentially at right angles to one another.

5. Work station according to Claim 2 or 3, characterised in that three frames are provided like a tunnel.

## Revendications

1. Poste de travail, en particulier pour des pièces à travailler relativement grandes, avec une unité d'usinage (6) équipée de préférence d'un laser (6), qui au moyen d'un chariot (3) mobile sur les deux côtés d'un bâti fixe (1) par l'intermédiaire d'un entraînement de broches et au moyen d'un support (5) prévu pour l'unité (6), comportant également un entraînement de broches, est susceptible de coulisser le long d'un premier et d'un deuxième axe, qui sont perpendiculaires entre eux, ainsi qu'en outre le long d'un troisième axe, qui est perpendiculaire au plan défini par les deux premiers axes ; cette unité (6) est éventuellement disposée avec rotation et basculement possible au niveau de l'extrémité du troisième axe (quatrième et cinquième axe), poste de travail caractérisé en ce que le bâti (1) est réalisé comme un cadre essentiellement vertical et comporte au niveau de son bord supérieur et de son bord inférieur respectivement une commande de broches (2a, 2b) pour le chariot (3), qui lui-même, dans la zone de ses deux bords extérieurs se développants perpendiculairement par rapport à son sens de déplacement, est muni respectivement d'une commande de broches pour un logement (4) et le cadre au niveau de sa base peut pivoter autour d'un axe s'étendant horizontalement.

2. Poste de travail selon la revendication 1, caractérisé en ce que sont prévus au moins deux cadres avec chacun au moins une unité d'usinage (6).

3. Poste de travail selon la revendication 2, caractérisé en ce que les deux cadres sont montés parallèles l'un par rapport à l'autre et les unités d'usinage sont tournées l'une vers l'autre.

4. Poste de travail selon les revendications 2 à 3, caractérisé en ce que les deux cadres sont prévus essentiellement à angle droit l'un par rapport à l'autre.

5. Poste de travail selon les revendications 2 ou 3, caractérisé en ce que sont prévus trois cadres à la manière d'un tunnel.
